# FASCICULE DE BREVET EUROPEEN

(11) **EP 3 055 606 B1**
(45) Date de publication et mention de la délivrance du brevet: **09.05.2018**
(21) Numéro de dépôt: 14790238.1
(22) Date de dépôt: 09.10.2014
(51) Int. Cl.: F17C 3/02

(54) **CAISSE AUTOPORTEUSE POUR L'ISOLATION THERMIQUE D'UNE CUVE DE STOCKAGE D'UN FLUIDE ET PROCEDE DE FABRICATION D'UNE TELLE CAISSE**
SELBSTTRAGENDES GEHÄUSE ZUR THERMISCHEN ISOLIERUNG EINES FLÜSSIGKEITSBEHÄLTERS UND VERFAHREN ZUR HERSTELLUNG DES GEHÄUSES
SELF-SUPPORTING BOX FOR THERMALLY INSULATING A FLUID STORAGE TANK AND METHOD FOR PRODUCING SUCH A BOX

(30) Priorité: 11.10.2013 FR 1359904
(43) Date de publication de la demande: 17.08.2016
(73) Titulaire: Gaz Transport et Technigaz, 78470 Saint-Rémy-Lès-Chevreuse (FR)
(72) Inventeur: DELETRE, Bruno, F-78000 Versailles (FR); CAPITAINE, Benoît, F-78140 Velizy Villacoublay (FR)
(74) Mandataire: Loyer & Abello
(86) Numéro de dépôt international: PCT/FR2014/052567
(87) Numéro de publication internationale: WO 2015/052446

(56) Documents cités:
- FR-A1- 2 877 639
- US-A- 3 331 174

## Description

### Domaine technique

L'invention se rapporte au domaine des cuves, étanches et thermiquement isolantes, à membranes, pour le stockage et/ou le transport de fluide, tel qu'un fluide cryogénique.

Des cuves étanches et thermiquement isolées à membranes sont notamment employées pour le stockage de gaz naturel liquéfié (GNL), qui est stocké, à pression atmosphérique, à environ -162°C. Ces cuves peuvent être installées à terre ou sur un ouvrage flottant. Dans le cas d'un ouvrage flottant, la cuve peut être destinée au transport de gaz naturel liquéfié ou à recevoir du gaz naturel liquéfié servant de carburant pour la propulsion de l'ouvrage flottant.

### Arrière-plan technologique

Le document FR 2 877 639 décrit une cuve étanche et thermiquement isolante comprenant une paroi de cuve, fixée à la structure porteuse d'un ouvrage flottant et présentant successivement, dans le sens de l'épaisseur, depuis l'intérieur vers l'extérieur de la cuve, une barrière étanche primaire destinée à être en contact avec le gaz naturel liquéfié, une barrière isolante primaire, une barrière étanche secondaire et une barrière isolante secondaire, ancrée à la structure porteuse. Les barrières isolantes sont constituées d'une pluralité de caisses calorifuges parallélépipédiques juxtaposées. Les caisses parallélépipédiques comportent un panneau de fond en contreplaqué, un panneau de couvercle en contreplaqué et une pluralité de voiles porteurs interposés entre le panneau de fond et le panneau de couvercle. Les caisses sont, en outre, remplies de garnitures calorifuges s'étendant dans les compartiments ménagés entre les voiles porteurs.

Les voiles porteurs sont fabriquées en un matériau composite à base de résine polymère, par exemple en résine de polyester ou époxy renforcée de fibres de verre ou de carbone, et sont obtenues par moulage par injection. Les voiles porteurs sont ondulés de sorte à augmenter la résistance aux efforts de compression, dans la direction perpendiculaire aux panneaux de fond et de couvercle, et résister ainsi à la pression hydrostatique exercée par le liquide contenu dans la cuve. Ainsi, grâce à ces ondulations, il est possible de diminuer l'épaisseur des voiles porteurs et, par conséquent, de réduire la conduction de la chaleur au travers desdits voiles. Reste toutefois que les matériaux composites, utilisés pour la fabrication des voiles ondulés, présentent une conductivité thermique importante. Dès lors, les performances d'isolation thermiques des caisses calorifuges ainsi fabriquées ne sont pas pleinement satisfaisantes.

Par ailleurs, le document DE 2441392 décrit également une cuve étanche et thermiquement isolante pour le stockage de gaz naturel liquéfié. La cuve comporte des caisses calorifuges comportant un panneau de couvercle, un panneau de fond et une pluralité de voiles porteurs s'étendant dans la direction d'épaisseur des caisses. Les voiles porteurs comportent chacun deux panneaux latéraux rigides, en bois ou en plastique, solidarisés l'un à l'autre par des entretoises. Un matériau isolant est injecté entre les deux panneaux latéraux rigides. Une telle structure des voiles porteurs permet d'obtenir un bon compromis entre, d'une part, une importante surface de support des voiles sur les panneaux de fond et de couvercle afin d'obtenir une résistance aux efforts de compression satisfaisante et, d'autre part, une conductivité thermique équivalente des voiles porteurs restreinte, c'est-à-dire de bonnes performances d'isolation thermique. Toutefois, la fabrication de tels voiles porteurs est complexe et n'autorise pas la réalisation de formes complexes.

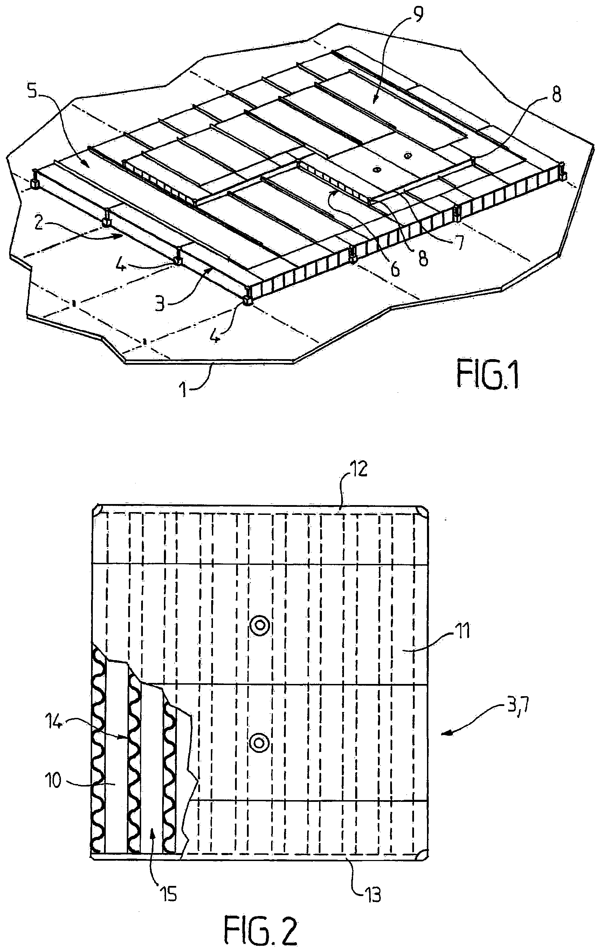

Le document US3331174 divulgue un panneau composite pour la construction d'un navire, et notamment pour la construction de la cale ou de la coque d'un navire. Le panneau composite comporte un fond, un couvercle et des entretoises s'étendant selon la direction d'épaisseur du panneau. Par ailleurs, les espaces entre les entretoises sont remplis avec de la mousse. Les entretoises peuvent être avantageusement composées d'une pluralité d'éléments collés les uns aux autres. Dans le mode de réalisation de la figure 2, les entretoises sont constituées de deux profilés en forme de U et d'un profilé central en forme de I. Les entretoises peuvent notamment être en polymère renforcé par des fibres de verre. Un polymère particulièrement avantageux est le styrène-butadiène.

### Résumé

Une idée à la base de l'invention est de proposer une caisse autoporteuse isolante qui présente de bonnes performances d'isolation thermique et qui soit simple à réaliser.

Selon un mode de réalisation, l'invention fournit une caisse isolante autoporteuse destinée à l'isolation thermique d'une cuve de stockage d'un fluide comportant :
- un panneau de fond et un panneau de couvercle espacés selon une direction d'épaisseur de la caisse ;
- une pluralité de voiles porteurs, interposés entre les panneaux de fond et de couvercle, et s'étendant dans la direction d'épaisseur de sorte à définir une pluralité de compartiments, lesdits voiles porteurs présentant une structure composite comportant une âme centrale s'étendant dans la direction d'épaisseur et deux peaux extérieures prenant en sandwich ladite âme centrale, ladite âme centrale présentant une conductivité thermique inférieure à celle des peaux extérieures ; et
   - une garniture calorifuge s'étendant à l'intérieur desdits compartiments ménagés entre les voiles porteurs ;
   dans laquelle:
   - les peaux extérieures comportent une matrice en polymère thermoplastique renforcée de fibres ;
   - l'âme centrale comporte une matrice en polymère thermoplastique ; et
   - les peaux extérieures et l'âme centrale sont liées par fusion des matrices thermoplastiques des peaux extérieures et de l'âme centrale.

Ainsi, une telle structure sandwich des voiles porteurs permet d'obtenir à la fois une excellente résistance à la flexion et une conductivité thermique équivalente limitée, c'est-à-dire de bonnes capacités d'isolation thermique. On appelle ici conductivité thermique équivalente d'un matériau hétérogène la conductivité thermique d'un matériau homogène qui produirait la même résistance thermique équivalente que le matériau hétérogène.

En outre, les peaux extérieures et l'âme centrale étant liées par fusion thermique des matrices, elles forment un ensemble cohérent capable de reprendre des efforts de compression sans nécessiter d'entretoises assurant la fixation des peaux extérieures. De plus, une telle liaison des peaux extérieures et de l'âme centrale peut être facilement mise en oeuvre.

Selon des modes de réalisation, une telle caisse isolante peut comporter une ou plusieurs des caractéristiques suivantes :
- les peaux extérieures comportent un tissu ou mat de fibres imprégné de la matrice en polymère thermoplastique, les fibres étant choisies parmi les fibres de verre, les fibres de carbone et les fibres aramides. De telles peaux extérieures présentent une excellente résistance à la compression ainsi qu'une faible densité.
- les matrices en polymère thermoplastique des peaux extérieures et de l'âme centrale présentent une différence de température de fusion inférieure à 60 °C.

Ainsi, la fusion thermique des matrices est facilitée.
- les matrices en polymère thermoplastique des peaux extérieures et de l'âme centrale sont identiques. Un tel mode de réalisation assure une excellente cohésion entre les peaux extérieures et l'âme centrale.
- les matrices en polymère thermoplastique des peaux extérieures et de l'âme centrale sont choisies parmi le polyéthylène, le polypropylène, le polyéthylènetéréphtalate, le polyamide, le polyoxyméthylène, le polyetherimide et des copolymères de ceux-ci.
- la matrice thermoplastique de l'âme centrale est renforcée par des fibres naturelles. Les fibres naturelles présentent une faible conductivité et permettent ainsi de renforcer l'âme centrale tout en limitant la conductivité thermique équivalente des voiles porteurs.
- la matrice thermoplastique de l'âme centrale est renforcée par des charges isolantes.
- la matrice thermoplastique de l'âme centrale est renforcée par un feutre en mat de verre et présente une densité inférieure à celle des peaux extérieures, de préférence inférieure à 900 kg/m³. Un tel matériau possède d'excellentes propriétés mécaniques et d'isolation thermique.
- le panneau de fond et le panneau de couvercle comportent chacun au moins un élément thermoplastique ; et les voiles porteurs sont fixés sur le panneau de fond et sur le panneau de couvercle par soudage thermoplastique dans des zones d'interface entre les voiles porteurs et les éléments thermoplastiques du panneau de fond et du panneau de couvercle. Ainsi, les voiles porteurs peuvent être assemblés au panneau de fond et/ou au panneau de couvercle de manière simple et fiable puisque leur fixation ne dégrade pas l'intégrité structurelle des voiles porteurs de telle sorte que ces derniers ne sont pas fragilisés par leur fixation sur le panneau de fond et/ou sur le panneau de couvercle.
- les voiles porteurs présentent une pluralité d'ondulations dont l'axe s'étend perpendiculairement aux panneaux de fond et de couvercle.

Selon un mode de réalisation, l'invention fournit aussi un procédé de fabrication d'une caisse isolante autoporteuse destinée à l'isolation thermique d'une cuve de stockage d'un fluide, ledit procédé comportant :
- réaliser une pluralité de voiles porteurs ;
- fournir un panneau de fond et un panneau de couvercle ;
- fixer les voiles porteurs entre le panneau de fond et le panneau de couvercle de telle sorte que le panneau de fond et le panneau de couvercle soient espacés dans une direction d'épaisseur de la caisse et que les voiles porteurs s'élèvent dans la direction d'épaisseur ;
- garnir une pluralité de compartiments ménagés entre les voiles porteurs avec une garniture calorifuge, dans lequel la réalisation d'un voile porteur comporte :
- fournir deux peaux extérieures comportant une matrice en polymère thermoplastique renforcée de fibres ;
- fournir une âme centrale comportant une matrice en polymère thermoplastique et présentant une conductivité thermique inférieure à celle des peaux extérieures ;
- positionner les deux peaux extérieures dans un moule, de part et d'autre de l'âme centrale ; et
- assembler les peaux extérieures et l'âme centrale par fusion des matrices thermoplastiques des peaux extérieures et de l'âme centrale.

Selon des modes de réalisation, un tel procédé peut comporter une ou plusieurs des caractéristiques suivantes :
- les peaux extérieures et l'âme centrale sont assemblées par thermocompression, coextrusion ou laminage à chaud.
- le panneau de fond et le panneau de couvercle comportent chacun au moins un élément thermoplastique pour la fixation des voiles porteurs et les voiles porteurs sont fixés au panneau de fond et au panneau de couvercle par une opération de soudage thermoplastique pratiquée au niveau des zones d'interface entre les voiles porteurs et les éléments thermoplastiques du panneau de fond et du panneau de couvercle.

Selon un mode de réalisation, l'invention fournit aussi une cuve étanche et thermiquement isolante de stockage d'un fluide comportant une barrière d'isolation thermique comprenant une pluralité de caisses susmentionnées juxtaposées, et une membrane d'étanchéité reposant contre la barrière d'isolation thermique. Une telle cuve peut être réalisée avec une seule membrane d'étanchéité ou avec deux membranes d'étanchéité alternées avec deux barrières d'isolation thermique.

Une telle cuve peut faire partie d'une installation de stockage terrestre, par exemple pour stocker du GNL ou être installée dans une structure flottante, côtière ou en eau profonde, notamment un navire méthanier, une unité flottante de stockage et de regazéification (FSRU), une unité flottante de production et de stockage déporté (FPSO) et autres.

Selon un mode de réalisation, un navire pour le transport d'un produit liquide froid comporte une double coque et une cuve précitée disposée dans la double coque.

Selon un mode de réalisation, l'invention fournit aussi un procédé de chargement ou déchargement d'un tel navire, dans lequel on achemine un fluide à travers des canalisations isolées depuis ou vers une installation de stockage flottante ou terrestre vers ou depuis la cuve du navire.

Selon un mode de réalisation, l'invention fournit aussi un système de transfert pour un fluide, le système comportant le navire précité, des canalisations isolées agencées de manière à relier la cuve installée dans la coque du navire à une installation de stockage flottante ou terrestre et une pompe pour entrainer un fluide à travers les canalisations isolées depuis ou vers l'installation de stockage flottante ou terrestre vers ou depuis la cuve du navire.

### Brève description des figures

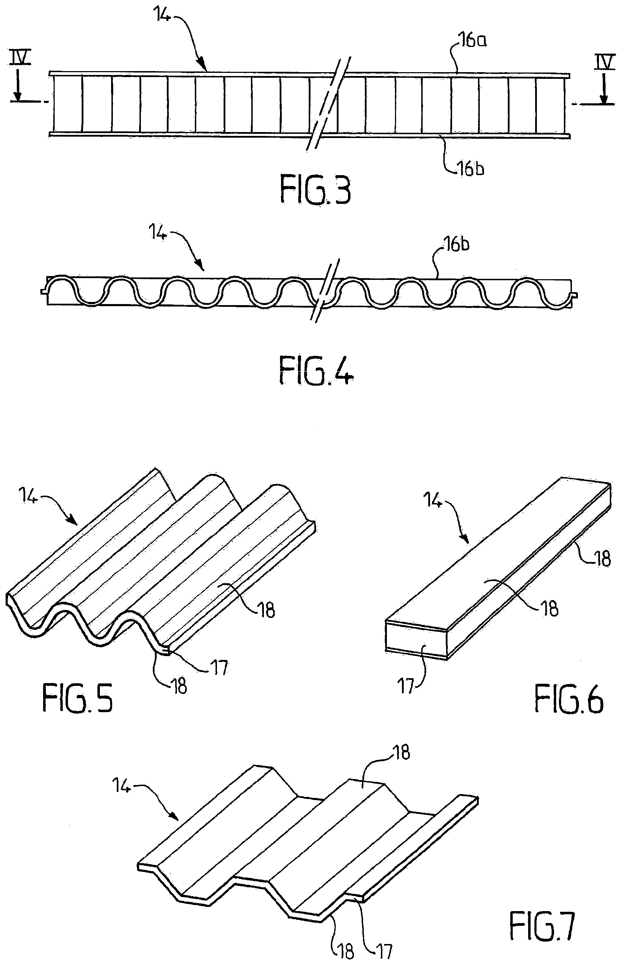

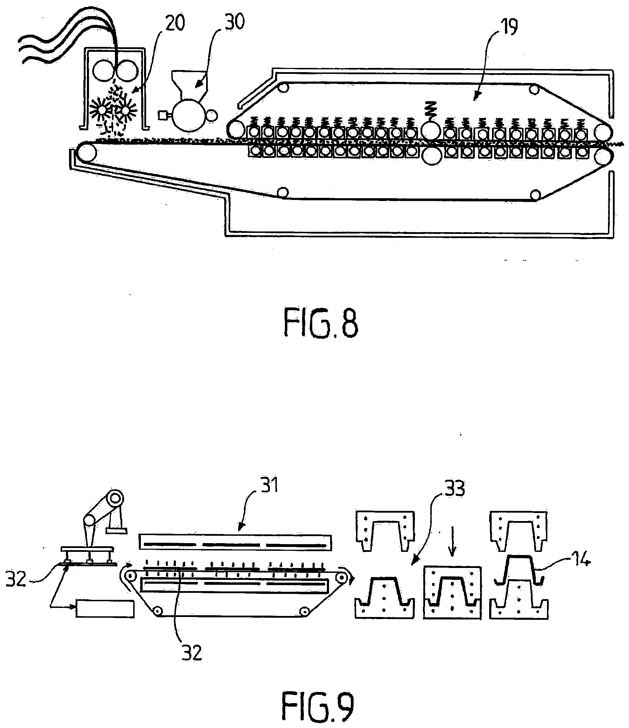

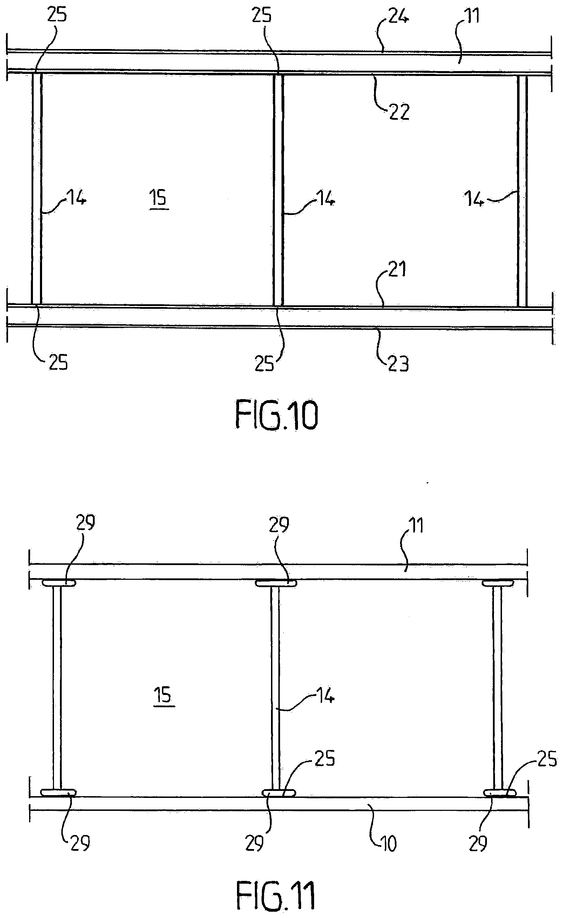

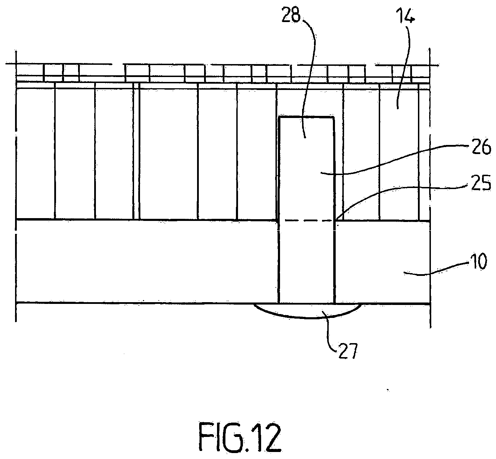

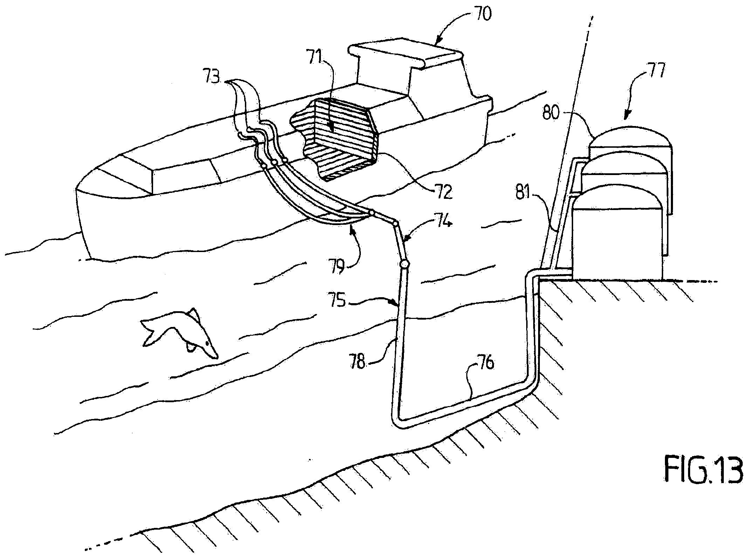

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue en perspective, écorchée, d'une paroi de cuve selon un mode de réalisation.
- **La** **figure 2** est une vue de dessus, écorchée d'une caisse isolante de la paroi de cuve de la figure 1.
- **La** **figure 3** est une vue latérale d'un voile porteur.
- **La** **figure 4** est une vue en coupe selon le plan IV-IV de la figure 3.
- **Les** **figures 5, 6 et 7** sont des vues en perspective de voiles porteurs, selon trois modes de réalisation distincts, présentant une structure composite.
- **La** **figure 8** illustre les étapes de fabrication des plaques de matériau composite comportant un feutre en mat de verre imprégné d'une matrice thermoplastique.
- **La** **figure 9** illustre schématiquement une étape de mise en forme par thermocompression d'un voile porteur.
- **La** **figure 10** est une vue schématique en coupe d'une caisse autoporteuse selon un premier mode de réalisation.
- **La** **figure 11** est une vue schématique en coupe d'une caisse autoporteuse selon un second mode de réalisation.
- **La** **figure 12** est une vue détaillée de l'assemblage entre un voile porteur et panneau de fond selon un troisième mode de réalisation.
- **La** **figure 13** est une représentation schématique écorchée d'une cuve de navire méthanier et d'un terminal de chargement/déchargement de cette cuve.

### Description détaillée de modes de réalisation

Sur la figure 1, une paroi d'une cuve étanche et thermiquement isolante est représentée. La structure générale d'une telle cuve est bien connue et présente une forme polyédrique. On ne s'attachera donc qu'à décrire une zone de paroi de la cuve, étant entendu que toutes les parois de la cuve peuvent présenter une structure générale similaire.

La paroi de la cuve comporte, depuis l'extérieur vers l'intérieur de la cuve, une structure porteuse 1, une barrière thermiquement isolante secondaire 2 qui est formée de caisses 3 calorifuges, juxtaposées sur la structure porteuse 1, et ancrées à celle-ci par des organes de retenue secondaire 4, une membrane d'étanchéité secondaire 5 portée par les caisses 3, une barrière thermiquement isolante primaire 6 formée de caisses 7 calorifuges juxtaposées et ancrées directement ou indirectement à la structure porteuse 1, par exemple en étant ancrées à la membrane d'étanchéité secondaire 5 par des organes de retenue primaire 8 et une membrane d'étanchéité primaire 9, portée par les caisses 7 et destinée à être en contact avec le fluide cryogénique contenu dans la cuve.

La structure porteuse 1 peut notamment être une tôle métallique autoporteuse ou, plus généralement, tout type de cloison rigide présentant des propriétés mécaniques appropriées. La structure porteuse peut notamment être formée par la coque ou la double coque d'un navire. La structure porteuse comporte une pluralité de parois définissant la forme générale de la cuve.

Les membranes d'étanchéité primaire 9 et secondaire 5 sont, par exemple, constituées d'une nappe continue de virures métalliques à bords relevés, lesdites virures étant soudées par leurs bords relevés sur des supports de soudure parallèles, fixés sur le couvercle des caisses 3, 7. Les virures métalliques sont, par exemple, réalisées en Invar ® : c'est-à-dire un alliage de fer et de nickel dont le coefficient de dilatation est typiquement compris entre 1,2.10⁻⁶ et 2.10⁻⁶ K⁻¹.

Les caisses 3 de la barrière thermiquement isolante secondaire 2 et les caisses 7 de la barrière thermiquement isolante primaire 6 peuvent indifféremment présenter des structures identiques ou différentes et des dimensions égales ou différentes.

En référence à la figure 2, nous décrirons la structure générale d'une caisse 3, 7 de la barrière thermiquement isolante secondaire 2 et/ou de la barrière thermiquement isolante primaire 6. La caisse 3, 7 présente sensiblement une forme de parallélépipède rectangle. La caisse 3, 7 comporte un panneau de fond 10 et un panneau de couvercle 11 parallèles. Le panneau de couvercle 11 présente, sur sa face interne, des rainures 12 pour le logement des supports de soudure des virures métalliques de membrane d'étanchéité.

Une pluralité d'éléments d'espacement sont interposés entre le panneau de fond 10 et le panneau de couvercle 11, perpendiculairement à ceux-ci. La pluralité d'éléments d'espacement comporte, d'une part, deux parois latérales opposées 12, 13, et, d'autre part, une pluralité de voiles porteurs 14. Les voiles porteurs 14 sont disposés parallèlement les uns aux autres entre les deux parois latérales 12, 13, dans une direction perpendiculaire auxdites parois latérales 12, 13.

Des compartiments 15 pour le logement d'une garniture calorifuge sont ménagés entre les voiles porteurs 14.

La garniture calorifuge peut être réalisée par tout matériau présentant des propriétés d'isolation thermique appropriées. A titre d'exemple, la garniture calorifuge est choisie parmi les matériaux tels que la perlite, la laine de verre, la mousse de polyuréthane, la mousse de polyéthylène, la mousse de polychlorure de vinyle, les aérogels ou autres.

Lorsque la garniture calorifuge n'est pas un matériau isolant en vrac, tel que de la perlite ou de la laine de verre, mais est constituée d'un mousse, par exemple, il n'est plus nécessaire que les parois latérales 12, 13 s'étendent sur toute la largeur des bords latéraux de la caisse 3, 7. Dès lors, dans un mode de réalisation non illustré, chaque paroi latérale 12, 13 du mode de réalisation de la figure 2 est remplacée par deux voiles de renforts anti-déversement s'étendant le long d'un bord latéral, de part et d'autre d'un plan médian, chacun des voiles de renfort s'étendant à proximité d'une extrémité dudit bord latéral. Les voiles porteurs 14, représentés sur la figure 2, sont ondulés et oscillent de part et d'autre de leur direction générale longitudinale. Chaque ondulation s'étend donc selon un axe perpendiculaire aux panneaux de fond 10 et de couvercle 11. Dans le mode de réalisation représenté, les ondulations sont sensiblement sinusoïdales. Toutefois, d'autres formes d'ondulations sont également possibles. A titre d'exemple, les ondulations peuvent notamment présenter des formes de dents triangulaires ou de créneaux rectangulaires. Grâce à leur forme, de tels voiles porteurs ondulés 14 présentent une haute résistance au flambement. Notons que si des ondulations présentant une structure périodique permettent d'assurer une bonne uniformité de la résistance à la compression, il est également possible de prévoir des ondulations non-périodiques afin de répondre à certaines exigences mécaniques localisées.

Les figures 3 et 4 illustrent un voile porteur 14. Le long de ses bords s'étendant en vis-à-vis du panneau de fond 10 et du panneau de couvercle 11, le voile porteur 14 comporte des semelles 16a, 16b de répartition des charges. La semelle supérieure 16a présente une surface plane destinée à venir en vis-à-vis du panneau de couvercle 11 alors que la semelle inférieure 16b présente une surface plane qui est destinée à venir en vis-à-vis du panneau de fond 10. Les semelles 16a, 16b présentent une largeur qui est supérieure à l'épaisseur de la paroi du voile porteur 14 dans sa partie principale, s'étendant entre les deux semelles 16a, 16b. Ainsi, les semelles 16a, 16b de répartition des charges empêchent une concentration des contraintes sur une zone particulière en offrant une plus grande surface d'appui entre le voile porteur 14 et les panneaux de fond 10 et de couvercle 11. Les semelles de répartition des charges peuvent présenter une forme parallélépipédique, tel qu'illustré sur les figures 3 ou 4. Dans ce cas, la largeur des semelles 16a, 16b pourra être égale à l'amplitude des ondulations. Dans d'autres modes de réalisation, les semelles 16a, 16b de répartition des charges pourront elles-mêmes présenter des ondulations.

En référence aux figures 5, 6 et 7, la structure composite des voiles porteurs 14 est décrite. Comme mentionné précédemment, les voiles porteurs 14 peuvent notamment présenter des ondulations sinusoïdales, telles que représentées sur la figure 5, des ondulations sous forme de dentures, telles que représentées sur la figure 7 ou présenter une géométrie plane, telle que représentée sur la figure 6.

Les voiles porteurs 14 présentent une structure composite comportant une âme centrale 17 et deux peaux extérieures 18 prenant en sandwich ladite âme centrale 17. L'âme centrale 17 a pour fonction d'augmenter la résistance à la flexion du voile porteur en augmentant son moment quadratique tout en ne présentant qu'un impact limité sur la conductivité thermique équivalente des voiles porteurs. Aussi, l'âme centrale 17 présente une conductivité thermique inférieure à celle des peaux extérieures 18.

L'épaisseur de l'âme centrale 17 est comprise entre 0.50 et 10 fois l'épaisseur d'une peau extérieure 18.

Les peaux extérieures 18 comprennent une matrice en polymère thermoplastique renforcée de fibres. De même, l'âme centrale 17 comporte une matrice en polymère thermoplastique. Ainsi, l'assemblage des peaux extérieures 18 avec l'âme centrale 17 peut être obtenu en liant les matrices thermoplastiques par fusion thermique. L'âme centrale 17 et les peaux extérieures 18 forment donc un ensemble cohérent et résistant capable de reprendre des efforts de compression sans se désolidariser.

A titre d'exemple, les matrices des peaux extérieures 18 et de l'âme centrale 17 sont choisies parmi le polyéthylène, le polypropylène, le polyéthylènetéréphtalate, le polyamide, le polyoxyméthylène, le polyetherimide et/ou des copolymères de ceux-ci. Dans un mode de réalisation, les matrices des peaux extérieures 18 et de l'âme centrale 17 sont différentes. Dès lors, afin de faciliter la liaison des peaux extérieures 18 et de l'âme centrale 17, il est avantageux que les matrices thermoplastiques présentent des températures de fusion proches, la différence entre leur température de fusion étant de préférence inférieure à 60 °C. Dans un autre mode de réalisation, la matrice des peaux extérieures 18 et celle de l'âme centrale 17 sont identiques.

Dans un mode de réalisation, les peaux extérieures 18 comportent un tissu ou mat de fibres imprégné de matrice en polymère thermoplastique, les fibres étant choisies parmi les fibres de verre, les fibres de carbone et les fibres aramides. Les fibres sont des fibres longues, c'est-à-dire supérieure à 10mm. De telles fibres longues assurent une résistance mécanique satisfaisante

Selon un mode de réalisation, les peaux extérieures 18 sont constituées d'un matériau couramment désigné par le sigle GMT, pour « glass fiber mat reinforced thermoplastics » en langue anglaise. De tels matériaux comportent une bonne résistance mécanique et présentent une conductivité thermique de l'ordre de 400 mW/m.K à 20 °C.

Selon un mode de réalisation représenté sur la figure 8, les matériaux de type GMT sont, dans un premier temps, fabriqués sous forme de plaques de matériau composite. Pour ce faire, on approvisionne une presse à double bande 19 en fibres de verre 20 et en résine thermoplastique 30. La résine thermoplastique 30 peut être chargée sur la presse à double bande 19 sous forme de films extrudés ou sous forme de poudre. Les fibres de verre 20 sont fournies sous forme de bobines de fil de verre, coupées à la longueur désirée. La résine thermoplastique 30 et les fibres de verre 20 sont co-laminées dans la presse à double bande 19. A la sortie de la presse double bande 19, un dispositif de découpe permet l'obtention d'une pluralité de plaques.

Selon un autre mode de réalisation, la matériau de type GMT est constitué à partir d'un ensemble comportant une mat de verre et une matrice sous forme d'un mat de polymère thermoplastique enchevêtré dans le mat de verre et formant ainsi un tissu destiné à être pressé à chaud. A titre d'exemple, un tel matériau est commercialisé par la société Vétrotex sous la dénomination Twintex®.

Par ailleurs, l'âme centrale 17 est également, de manière avantageuse, renforcée. Toutefois, afin de limiter la conductivité thermique de l'âme centrale 17, le matériau de renfort est choisi pour ses caractéristiques d'isolation thermique.

Dans un mode de réalisation, l'âme centrale 17 est renforcée par des fibres naturelles, telles que les fibres de lin, de chanvre, de jute. De telles fibres naturelles permettent d'obtenir des matériaux présentant des conductivités thermiques de l'ordre de 250 mW/m.K à 20 °C. Selon un mode de réalisation, les fibres naturelles se présentent sous la forme d'un feutre, c'est-à-dire d'une étoffe non-tissée dans laquelle sont agglutinées les fibres. Un tel feutre présente de bonnes caractéristiques d'isolation thermique.

Dans un autre mode de réalisation, l'âme centrale 17 est renforcée par des charges isolantes. De telles charges isolantes sont typiquement des microsphères creuses, en verre ou en thermoplastique, par exemple.

Enfin, dans encore un autre mode de réalisation, l'âme centrale 17 est composée d'un matériau thermoplastique renforcé à faible densité, désigné par le signe LWRT, pour « Light-Weight Reinforced Thermoplastic » en langue anglaise. Un tel matériau comporte un feutre en mat de verre et une matrice thermoplastique constituée de fibres de polypropylène. A titre d'exemple, un matériau de ce type est vendu par la société Quadrant sous la dénomination commerciale SymaLITE®. Un tel matériau présente typiquement une densité inférieure à 900 kg/m³, de l'ordre de 500 kg/m³. La densité d'un tel matériau thermoplastique dépend notamment de l'intensité de la compression qui est appliquée au matériau lors de sa fabrication

Selon un mode de réalisation, les peaux extérieures 18 sont disposées de part et d'autre de l'âme centrale 17 puis l'ensemble est soumis à une opération de mise en forme. Pour ce faire, comme représenté sur la figure 9, l'ensemble 32 comportant l'âme centrale 17 et les peaux extérieures 18, disposées de part et d'autre de ladite âme centrale 17, est chauffé dans un four 31, puis disposé dans un moule 33 dans lequel il va être mis en forme en appliquant une pression. Les voiles porteurs 14 sont ainsi mis en forme par thermocompression, en chauffant les plaques de matériau composite puis en les emboutissant sous-presse.

Dans un autre mode de réalisation, les voiles porteurs 14 peuvent également être réalisés par thermoformage, c'est-à-dire par fluage des plaques de matériau composite sous conditions de température et de mise sous vide.

Les peaux extérieures 18 et l'âme centrale 17 peuvent être liées par fusion thermique de leur matrice lors de la mise en forme par thermocompression ou thermoformage. Selon un autre mode de réalisation, la liaison des peaux extérieures 18 et de l'âme centrale 17 peut être effectuée préalablement à la mise en forme par thermocompression ou au thermoformage. Pour ce faire, dans une variante, l'ensemble 32 comportant l'âme centrale 17 et les peaux extérieures 18 est préalablement soumis à une opération de laminage à chaud. Selon une autre variante, les peaux extérieures 18 et l'âme centrale 17 sont coextrudées.

On note également que, pour obtenir un voile porteur 14 présentant une géométrie plane telle que représentée sur la figure 6, la mise en forme par thermoformage ou thermocompression n'est pas nécessaire. Dans ce cas, le voile porteur 14 peut être obtenu directement après un laminage à chaud ou une coextrusion.

La figure 10 illustre l'assemblage de voiles porteurs 14 et de panneaux de fond 10 et de couvercle 11 selon un mode réalisation. Les panneaux de fond 10 et de couvercle 11 présentent ici un corps en bois contreplaqué. Les faces intérieures des panneaux de fond 10 et de couvercle 11, tournées vers l'intérieur de la caisse, sont recouvertes de films thermoplastiques 21, 22. Afin de permettre la fixation des voiles porteurs 14 aux panneaux 10, 11, l'on pratique une opération de soudage plastique dans les zones d'interface 25 entre les films thermoplastiques 22 et les voiles porteurs 14.

L'opération de soudage est, par exemple, réalisée par rayonnement infrarouge. Il est toutefois possible d'utiliser toute autre méthode de soudage plastique appropriée, telle que le soudage par ultrason, le chauffage par induction, le soudage par friction, le soudage par apport de matière en fusion, le soudage par jet d'air chaud ou le flammage. Notons que dans le cas d'un soudage par induction, il est nécessaire de disposer des inserts métalliques sur les voiles porteurs et/ou sur les panneaux de fond 10 et/ou de couvercle 11, à l'interface entre les voiles porteurs 14 et les panneaux de fond 10 et de couvercle 11 de sorte à permettre un chauffage de la matière thermoplastique.

Dans un mode de réalisation, avant de procéder aux opérations de soudage, des masques de protection sont préalablement disposés sur les faces intérieures des panneaux de fond 10 et de couvercle 11 entre les zones d'interface 25 entre les voiles porteurs 14 et les panneaux 10, 11. Lorsque les opérations de soudage ont été effectuées, les masques de protection peuvent alors être retirés. Ainsi, les films thermoplastiques 21, 22 ne sont pas détériorés lors des opérations de soudage. De tels masques de protection sont, par exemple, réalisés en matériaux métalliques, céramiques et/ou en verre. De tels masques sont avantageusement équipés d'un circuit de refroidissement dans lequel circule un fluide, tel que de l'eau, de l'air ou de l'huile afin de réguler la température desdits masques.

Dans le mode de réalisation représenté sur la figure 10, la face extérieure des panneaux de fond 10 et de couvercle 11 est également recouverte de films thermoplastiques 23, 24. Un tel agencement permet d'équilibrer la flexion des panneaux de couvercle 11 et de fond 10, notamment lorsqu'ils sont sous soumis à d'importantes contraintes thermiques, lors de la mise à froid de la cuve.

Dans le mode de réalisation représenté sur la figure 11, des bandes 29 de films thermoplastiques sont disposées dans les zones d'interface 25 avec les voiles porteurs 14.

Les films thermoplastiques 21, 22, 23, 24, 29 sont par exemple réalisés dans un matériau composite comportant une matrice thermoplastique renforcée par des fibres. Ainsi, de tels films thermoplastiques 22, 23, 24, 29 contribuent à augmenter la résistance mécanique des panneaux de fond et de couvercle, en augmentant leur rigidité en flexion et en améliorant leur tenue au poinçonnement. De tels films thermoplastiques 22, 23, 24, 29 présentent typiquement une épaisseur de l'ordre de 0,5 à 5 mm.

Dans un mode de réalisation, les films thermoplastiques 21, 22, 23, 24, 29 sont fixés sur le corps des panneaux de fond 10 et de couvercle 11 par collage. La colle utilisée est, par exemple, une colle acrylique, une colle polyuréthane, ou une colle époxyde.

Dans un autre mode de réalisation, les films thermoplastiques 21, 22, 23, 24, 29 sont fixés sur le corps des panneaux par un procédé de pressage à chaud. Dans un tel cas, il est envisageable d'intégrer la fixation des films thermoplastiques directement au procédé de fabrication du contreplaqué. Pour ce faire, l'on superpose les plis de bois, préalablement encollés, et les films thermoplastiques, puis l'on soumet l'empilage ainsi obtenu à un pressage à chaud. A titre d'exemple, pour un tel pressage à chaud, l'on soumet l'empilage à une température de l'ordre de 190 à 200°C et à une pression de l'ordre de 1 à 3 MPa pendant une durée de 5 minutes.

Afin de faciliter les opérations de soudage, les films thermoplastiques 21, 22, 23, 24, 29 peuvent comporter une matrice thermoplastique identique à la matrice thermoplastique de l'âme centrale 17 et/ou des peaux extérieures 18.

Dans un autre mode de réalisation non représenté, c'est le corps des panneaux de fond 10 et de couvercle 11, en tant que tel, qui forme l'élément thermoplastique pour la fixation des voiles porteurs 14. Selon une première variante, les panneaux de fond 10 et de couvercle 11 comportent un corps réalisé dans un matériau composite comportant une matrice thermoplastique renforcée par des fibres.

Selon une seconde variante, les panneaux de fond 10 et de couvercle 11 sont fabriqués dans un corps en bois, imprégné d'une matrice thermoplastique. Le corps peut être fabriqué par agglomération de fibres préalablement imprégnées d'une matrice thermoplastique. De manière alternative, le corps peut être réalisé en bois contreplaqué dont le pli intérieur, et optionnellement le pli extérieur, sont fabriqués dans un bois suffisamment poreux pour faire diffuser la matrice plastique à chaud et sous pression à l'intérieur desdits plis. Un tel bois est par exemple choisi parmi le bouleau, le sapin, le hêtre ou autres. Afin de faciliter l'imprégnation du corps en bois par la matrice thermoplastique, le corps en bois peut présenter des rainures ou toute autre préparation de surface améliorant la liaison entre le corps en bois et la matrice thermoplastique.

La figure 12 présente l'assemblage de voiles porteurs 14 et de panneaux de fond 10 et de couvercle 11 selon un autre mode réalisation. Dans ce mode de réalisation, les panneaux de fond 10 et de couvercle 10 présentent, dans leurs zones d'interface 25 avec les voiles porteurs 14, des alésages traversants, au travers desquelles sont insérés des pions thermoplastiques 26. Les pions thermoplastiques 26 sont équipés de têtes 27 reposant contre la face extérieure des panneaux de fond 10 et de couvercle 11 et d'extrémités distales 28 s'étendant à l'intérieur d'alésages ménagés dans les bords des voiles porteurs 14. Le soudage des pions thermoplastiques 26 à l'intérieur des alésages ménagés dans les voiles porteurs 14 permet d'assurer la fixation des voiles porteurs 14 aux panneaux de fond 10 et de couvercle 11. Dans un mode de réalisation, les opérations de soudage sont réalisées par friction en entraînant en rotation les pions thermoplastiques 26. Le mouvement des pions thermoplastiques 26 par rapport aux voiles porteurs 14 entraîne un échauffement de l'interface jusqu'à plastification locale de la matière thermoplastique puis soudage. Selon un mode de réalisation, les panneaux de fond 10 et de couvercle 11 comportent un corps réalisé dans un matériau composite présentant une matrice thermoplastique de telle sorte que les pions thermoplastiques 26 soient également soudés au panneau de fond 10 ou de couvercle 11.

En référence à la figure 13, une vue écorchée d'un navire méthanier 70 montre une cuve étanche et isolée 71 de forme générale prismatique montée dans la double coque 72 du navire. La paroi de la cuve 71 comporte une barrière étanche primaire destinée à être en contact avec le GNL contenu dans la cuve, une barrière étanche secondaire agencée entre la barrière étanche primaire et la double coque 72 du navire, et deux barrières isolante agencées respectivement entre la barrière étanche primaire et la barrière étanche secondaire et entre la barrière étanche secondaire et la double coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de GNL depuis ou vers la cuve 71.

La figure 13 représente un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du méthanier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple 5 km, ce qui permet de garder le navire méthanier 70 à grande distance de la côte pendant les opérations de chargement et de déchargement.

Pour engendrer la pression nécessaire au transfert du gaz liquéfié, on met en oeuvre des pompes embarquées dans le navire 70 et/ou des pompes équipant l'installation à terre 77 et/ou des pompes équipant le poste de chargement et de déchargement 75.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications. L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Caisse isolante autoporteuse (3, 7) destinée à l'isolation thermique d'une cuve de stockage d'un fluide comportant :
- un panneau de fond (10) et un panneau de couvercle (11) espacés selon une direction d'épaisseur de la caisse (3, 7) ;
- une pluralité de voiles porteurs (14), interposés entre les panneaux de fond (10) et de couvercle (11), et s'étendant dans la direction d'épaisseur de sorte à définir une pluralité de compartiments (15), lesdits voiles porteurs (14) présentant une structure composite comportant une âme centrale (17) s'étendant dans la direction d'épaisseur et deux peaux extérieures (18) prenant en sandwich ladite âme centrale (17), et
- une garniture calorifuge s'étendant à l'intérieur desdits compartiments (15) ménagés entre les voiles porteurs (14) ;
dans laquelle:
- les peaux extérieures (18) comportent une matrice en polymère thermoplastique renforcée de fibres ;
- l'âme centrale (17) comporte une matrice en polymère thermoplastique ; et
ladite caisse isolante autoporteuse (3, 7) étant **caractérisée en ce que** ladite âme centrale (17) présente une conductivité thermique inférieure à celle des peaux extérieures (18) et **en ce que** les peaux extérieures (18) et l'âme centrale (17) sont liées par fusion des matrices thermoplastiques des peaux extérieures (18) et de l'âme centrale (17).

2. Caisse isolante autoporteuse (3, 7) selon la revendication 1, dans laquelle les peaux extérieures (18) comportent un tissu ou mat de fibres imprégné de la matrice en polymère thermoplastique, les fibres étant choisies parmi les fibres de verre, les fibres de carbone et les fibres aramides.

3. Caisse isolante autoporteuse (3, 7) selon la revendication 1 ou 2, dans laquelle les matrices en polymère thermoplastique des peaux extérieures (18) et de l'âme centrale (17) présentent une différence de température de fusion inférieure à 60 °C.

4. Caisse isolante autoporteuse (3, 7) selon la revendication 3, dans laquelle les matrices en polymère thermoplastique des peaux extérieures (18) et de l'âme centrale (17) sont identiques.

5. Caisse isolante autoporteuse (3, 7) selon l'une quelconque des revendications 1 à 4, dans laquelle les matrices en polymère thermoplastique des peaux extérieures (18) et de l'âme centrale (17) sont choisies parmi le polyéthylène, le polypropylène, le polyéthylènetéréphtalate, le polyamide, le polyoxyméthylène, le polyetherimide et des copolymères de ceux-ci.

6. Caisse isolante autoporteuse (3, 7) selon l'une quelconque des revendications 1 à 5, dans laquelle la matrice thermoplastique de l'âme centrale (17) est renforcée par des fibres naturelles.

7. Caisse isolante autoporteuse (3, 7) selon l'une quelconque des revendications 1 à 6, dans laquelle la matrice thermoplastique de l'âme centrale (17) est renforcée par des charges isolantes.

8. Caisse isolante autoporteuse (3, 7) selon l'une quelconque des revendications 1 à 7, dans laquelle la matrice thermoplastique de l'âme centrale (17) est renforcée par un feutre en mat de verre et présente une densité inférieure à celle des peaux extérieures (18), de préférence inférieure à 900 kg/m3.

9. Caisse isolante autoporteuse (3, 7) selon l'une quelconque des revendications 1 à 8, dans laquelle :
- le panneau de fond (10) et le panneau de couvercle (11) comportent chacun au moins un élément thermoplastique (22, 26, 29) ; et
- les voiles porteurs (14) sont fixés sur le panneau de fond (10) et sur le panneau de couvercle (11) par soudage thermoplastique dans des zones d'interface entre les voiles porteurs (14) et les éléments thermoplastiques (22, 26, 29) du panneau de fond (10) et du panneau de couvercle (11).

10. Caisse isolante autoporteuse (3, 7) selon l'une quelconque des revendications 1 à 9, dans laquelle les voiles porteurs (14) présentent une pluralité d'ondulations dont l'axe s'étend perpendiculairement aux panneaux de fond (10) et de couvercle (11).

11. Procédé de fabrication d'une caisse isolante autoporteuse (3, 7) destinée à l'isolation thermique d'une cuve de stockage d'un fluide, ledit procédé comportant :
- réaliser une pluralité de voiles porteurs (14) ;
- fournir un panneau de fond (10) et un panneau de couvercle (11) ;
- fixer les voiles porteurs (14) entre le panneau de fond (10) et le panneau de couvercle (11) de telle sorte que le panneau de fond (10) et le panneau de couvercle (11) soient espacés dans une direction d'épaisseur de la caisse (3, 7) et que les voiles porteurs (14) s'élèvent dans la direction d'épaisseur ;
- garnir une pluralité de compartiments (15) ménagés entre les voiles porteurs (14) avec une garniture calorifuge, dans lequel la réalisation d'un voile porteur (14) comporte :
- fournir deux peaux extérieures (18) comportant une matrice en polymère thermoplastique renforcée de fibres ;
- fournir une âme centrale (17) comportant une matrice en polymère thermoplastique;
- positionner les deux peaux extérieures (18), de part et d'autre de l'âme centrale (17) ; et
- assembler les peaux extérieures (18) et l'âme centrale (17) ;
ledit procédé de fabrication étant **caractérisé en ce que** l'âme centrale (17) présente une conductivité thermique inférieure à celle des peaux extérieures et **en ce que** les peaux extérieures (18) et l'âme centrale (17) sont assemblées par fusion des matrices thermoplastiques des peaux extérieures (18) et de l'âme centrale (17).

12. Procédé de fabrication selon la revendication 11, dans lequel les peaux extérieures (18) et l'âme centrale (17) sont assemblées par thermocompression, thermoformage, coextrusion ou laminage à chaud.

13. Procédé de fabrication selon la revendication 11 ou 12, dans lequel le panneau de fond (10) et le panneau de couvercle (11) comportent chacun au moins un élément thermoplastique (22, 26, 29) pour la fixation des voiles porteurs (14) ; et dans lequel les voiles porteurs (14) sont fixés au panneau de fond (10) et au panneau de couvercle (11) par une opération de soudage thermoplastique pratiquée au niveau des zones d'interface entre les voiles porteurs (14) et les éléments thermoplastiques (22, 26, 29) du panneau de fond (10) et du panneau de couvercle (11).

14. Cuve étanche et thermiquement isolante de stockage d'un fluide comportant une barrière d'isolation thermique comprenant une pluralité de caisses (3, 7) selon l'une quelconque des revendications 1 à 10, juxtaposées, et une membrane d'étanchéité reposant contre la barrière d'isolation thermique.

15. Navire (70) pour le transport d'un fluide, le navire comportant une double coque (72) et une cuve (71) selon la revendication 14 disposée dans la double coque.

16. Procédé de chargement ou déchargement d'un navire (70) selon la revendication 15, dans lequel on achemine un fluide à travers des canalisations isolées (73, 79, 76, 81) depuis ou vers une installation de stockage flottante ou terrestre (77) vers ou depuis la cuve du navire (71).

17. Système de transfert pour un fluide, le système comportant un navire (70) selon la revendication 15, des canalisations isolées (73, 79, 76, 81) agencées de manière à relier la cuve (71) installée dans la coque du navire à une installation de stockage flottante ou terrestre (77) et une pompe pour entrainer un fluide à travers les canalisations isolées depuis ou vers l'installation de stockage flottante ou terrestre vers ou depuis la cuve du navire.

## Patentansprüche

1. Selbstragende isolierende Kastenstruktur (3, 7) zur Wärmeisolierung eines Flüssigkeitstanks umfassend:
- eine Bodenplatte (10) und eine Abdeckplatte (11), beabstandet voneinander entsprechend einer Schichtdicke der Kastenstruktur (3,7);
- eine Vielzahl von Tragewänden (14), eingesetzt zwischen den Bodenplatten (11) und den Abdeckplatten (11), und sich erstreckend in der Schichtdicke der Kastenstruktur und eine Vielzahl von Abschnitten (15) bildend, wobei die Tragewände (14) eine Verbundstruktur aufweisen, welche einen sich in der Schichtdicke erstreckenden zentralen Steg (17) und zwei Außenhäute (18) umfasst, welche den zentralen Steg umschließen, und
- eine wärmeisolierende Füllung, welche sich im Inneren der zwischen den Tragewänden (14) angeordneten Abschnitte (15) erstreckt;
wobei:
- die Außenhäute (18) eine faserverstärkte Matrize aus thermoplastischem Polymer umfassen;
- der zentrale Steg (17) eine Matrize aus thermoplastischem Polymer umfasst; und
die selbsttragende isolierende Kastenstruktur (3,7) **dadurch gekennzeichnet ist, dass** der zentrale Steg (17) eine niedrigere Wärmeleitfähigkeit als die der Außenhäute (18) aufweist und dass die Außenhäute (18) und der zentrale Steg (17) durch Fusion der thermoplastischen Matrizen der Außenhäute (18) und des zentralen Stegs (17) verbunden sind.

2. Selbstragende isolierende Kastenstruktur (3, 7) gemäß Anspruch 1, wobei die Außenhäute (18) einen von der Matrize aus thermoplastischem Polymer durchtränkten Faserstoff oder Fasermatte umfassen, wobei die Fasern auswählbar sind zwischen Glasfasern, Karbonfasern und Aramidfasern.

3. Selbstragende isolierende Kastenstruktur (3, 7) gemäß Anspruch 1 oder 2, wobei die Matrizen aus thermoplastischem Polymer der Außenhäute (18) und des zentralen Stegs (17) einen Unterscheid in der Fusionstemperatur unter 60°C aufweisen.

4. Selbstragende isolierende Kastenstruktur (3, 7) gemäß Anspruch 3, wobei die Matrizen aus thermoplastischem Polymer der Außenhäute (18) und des zentralen Stegs (17) identisch sind.

5. Selbstragende isolierende Kastenstruktur (3, 7) gemäß einem der Ansprüche 1 bis 4, wobei die Matrizen aus thermoplastischem Polymer der Außenhäute (18) und des zentralen Stegs (17) wählbar sind zwischen Polyethylen, Polypropylen, Polyethylenterephthalaten, Polyamiden, Polyoxymethylen, Polyetherimiden und Mischpolymeren derselbigen.

6. Selbstragende isolierende Kastenstruktur (3, 7) gemäß einem der Ansprüche 1 bis 5, wobei die thermoplastische Matrize des zentralen Stegs (17) mit natürlichen Fasern verstärkt ist.

7. Selbstragende isolierende Kastenstruktur (3, 7) gemäß einem der Ansprüche 1 bis 6, wobei die thermoplastische Matrize des zentralen Stegs (17) mit wärmeisolierenden Füllstoffen verstärkt ist.

8. Selbstragende isolierende Kastenstruktur (3, 7) gemäß einem der Ansprüche 1 bis 7, wobei die thermoplastische Matrize des zentralen Stegs (17) durch Glasfaservlies verstärkt ist und eine geringere Dichte als die der Außenhäute (18), vorzugsweise geringer als 900kg/m3, aufweist.

9. Selbstragende isolierende Kastenstruktur (3, 7) gemäß einem der Ansprüche 1 bis 8, wobei:
- die Bodenplatte (10) und die Abdeckplatte (11) jeweils mindestens ein thermoplastisches Element (22, 26, 29) aufweisen; und
- die Tragewände (14) an der Bodenplatte (10) und an der Abdeckplatte (11) mittels thermoplastischen Schweißen im Schnittstellenbereich zwischen den Tragewänden (14) und den thermoplastischen Elementen (22, 26, 29) der Bodenplatte (10) und der Abdeckplatte (11) befestigt sind.

10. Selbstragende isolierende Kastenstruktur (3, 7) gemäß einem der Ansprüche 1 bis 9, wobei die Tragewände (14) eine Vielzahl von Wellen aufweisen, deren Achse sich senkrecht zu der Bodenplatte (10) und der Abdeckplatte (11) erstreckt.

11. Verfahren zu Herstellung einer selbsttragenden isolierenden Kastenstruktur (3,7) zur Wärmeisolierung eines Flüssigkeitstanks, wobei das Verfahren umfasst:
- Herstellen einer Vielzahl von Tragewänden (14);
- Bereitstellen einer Bodenplatte (10) und einer Abdeckplatte (11);
- Befestigen der Tragewände (14) zwischen der Bodenplatte (10) und der Abdeckplatte (11) derart, dass die Bodenplatte (10) und die Abdeckplatte (11) in der Schichtdicke der Kastenstruktur (3, 7) beabstandet werden und die Tragewände (14) in der Schichtdicke aufsteigen;
- Füllen einer Vielzahl der zwischen den Tragewänden (14) angeordneten Abschnitte (15) mit einer wärmeisolierenden Füllung, wobei die Herstellung einer Tragewand (14) umfasst:
- Bereitstellen zweier Außenhäute (18) umfassend eine faserverstärkte Matrize aus thermoplastischem Polymer;
- Bereitstellen eines zentralen Stegs (17) umfassend eine Matrize aus thermoplastischem Polymer;
- Anordnen der zwei Außenhäute (18) beidseitig des zentralen Stegs (17); und
- Zusammenstellen der Außenhäute (18) und des zentralen Stegs (17);
wobei das Verfahren zur Herstellung **dadurch gekennzeichnet ist, dass** der zentrale Steg (17) eine niedrigere Wärmeleitfähigkeit als die der Außenhäute (18) aufweist und dass die Außenhäute (18) und der zentrale Steg (17) durch Fusion der thermoplastischen Matrizen der Außenhäute (18) und des zentralen Stegs (17) verbunden werden.

12. Verfahren zur Herstellung gemäß Anspruch 11, wobei die Außenhäute (18) und der zentrale Steg (17) mittels Thermokompression, Thermoformen, Koextrusion oder Warmwalzen zusammengefügt werden.

13. Verfahren zur Herstellung gemäß Anspruch 11 oder 12, wobei die Bodenplatte (10) und die Abdeckplatte (11) jeweils mindestens ein thermoplastisches Element (22, 26, 29) zur Befestigung der Tragewände (14) umfassen; und wobei die Tragewände (14) an der Bodenplatte und an der Abdeckplatte mittels thermoplastischen Schweißen im Schnittstellenbereiche zwischen den Tragewänden (14) und den thermoplastischen Elementen (22, 26, 29) der Bodenplatte (10) und der Abdeckplatte (11) angebracht werden.

14. Dichtes und wärmeisolierendes Gefäß zur Flüssigkeitsspeicherung umfassend eine wärmeisolierende Sperre, welche eine Vielzahl von nebeneinanderliegenden Kastenstrukturen (3, 7) gemäß einem der Ansprüche 1 bis 10 und eine Abdichtungsmembran, welche auf der wärmeisolierende Sperre aufliegt, umfasst.

15. Schiff (70) zum Transport einer Flüssigkeit, wobei das Schiff eine Doppelhülle (72) und einen in der Doppelhülle angeordneten Tank (71) gemäß Anspruch 14 umfasst.

16. Verfahren zur Be- und Entladung eines Schiffes (70) gemäß Anspruch 15, wobei eine Flüssigkeit von oder nach einer schwimmenden oder erdverbundenen Speicheranlage (77) zu oder von dem Tank des Schiffs (71) durch isolierte Rohrleitungen (73, 79, 76, 81) geleitet wird.

17. Transfersystem für eine Flüssigkeit, wobei das System ein Schiff (70) gemäß Anspruch 15, isolierte Rohrleitungen (73, 79, 76, 81), welche so angeordnet sind, dass sie den in der Schiffshülle angeordneten Tank (71) mit einer schwimmenden oder erdverbundenen Speicheranlage (77) verbinden, und eine Pumpe umfasst, um eine Flüssigkeit durch isolierte Rohrleitungen von oder nach der schwimmenden oder erdverbundenen Speicheranlage zu oder von dem Tank des Schiffs zu leiten.

## Claims

1. A self-supporting insulating case (3, 7) intended for thermal insulation of a fluid-storage tank and comprising:
- a base panel (10) and a cover panel (11) spaced apart in a thickness direction of the case (3, 7);
- a plurality of bearing webs (14) interposed between the base panel (10) and cover panel (11) and extending in the thickness direction so as to define a plurality of compartments (15), said bearing webs (14) having a composite structure comprising a central core (17) extending in the thickness direction, and two external skins (18) surrounding said central core (17) in the manner of a sandwich; and
- a heat-insulating lining extending inside said compartments (15) arranged between the bearing webs (14);
wherein:
- the outer skins comprise a matrix of fiber-reinforced thermoplastic polymer;
- the central core (17) comprises a matrix of thermoplastic polymer; and
The self-supporting insulating case (3, 7) being characterize in that the said central core (17) has a thermal conductivity lower than that of the outer skins (18) and in that the outer skins (18) and the central core (17) are connected by fusion of the thermoplastic matrices of the outer skins (18) and the central core (17).

2. The self-supporting insulating case (3, 7) as claimed in claim 1, wherein the outer skins (18) comprise a fiber fabric or mat impregnated with the thermoplastic polymer matrix, the fibers being selected from glass fibers, carbon fibers and aramide fibers.

3. The self-supporting insulating case (3, 7) as claimed in claim 1 or 2, wherein the thermoplastic polymer matrices of the outer skins (18) and the central core (17) have a fusion temperature difference of less than 60°C.

4. The self-supporting insulating case (3, 7) as claimed in claim 3, wherein the thermoplastic polymer matrices of the outer skins (18) and the central core (17) are identical.

5. The self-supporting insulating case (3, 7) as claimed in any of claims 1 to 4, wherein the thermoplastic matrices of the outer skins (18) and the central core (17) are selected from polyethylene, polypropylene, polyethylene terephthalate, polyamide, polyoxymethylene, polyetherimide and copolymers thereof.

6. The self-supporting insulating case (3, 7) as claimed in any of claims 1 to 4, wherein the thermoplastic matrix of the central core (17) is reinforced with natural fibers.

7. The self-supporting insulating case (3, 7) as claimed in any of claims 1 to 6, wherein the thermoplastic matrix of the central core (17) is reinforced with insulating charges.

8. The self-supporting insulating case (3, 7) as claimed in any of claims 1 to 7, wherein the thermoplastic matrix of the central core (17) is reinforced by a felt of glass matting and has a density less than that of the outer skins (18), preferably less than 900 kg/m3.

9. The self-supporting insulating case (3, 7) as claimed in any of claims 1 to 8, wherein:
- the base panel (10) and the cover panel (11) each comprise at least one thermoplastic element (22, 26, 29); and
- the bearing webs (14) are fixed to the base panel (10) and cover panel (11) by thermoplastic welding in the interface zones between the bearing webs (14) and the thermoplastic elements (22, 26, 29) of the base panel (10) and cover panel (11).

10. The self-supporting insulating case (3, 7) as claimed in any of claims 1 to 9, wherein the bearing webs (14) have a plurality of undulations, the axis of which extends perpendicular to the base panel (10) and cover panel (11).

11. A method for producing a self-supporting insulating case (3, 7) intended to provide thermal insulation for a fluid-storage tank, said method comprising:
- production of a plurality of bearing webs (14);
- provision of a base panel (10) and a cover panel (11);
- fixing the bearing webs (14) between the base panel (10) and the cover panel (11) such that the base panel (10) and the cover panel (11) are spaced apart in a thickness direction of the case (3, 7) and the bearing webs (14) extend in the thickness direction;
- lining a plurality of compartments (15) arranged in the bearing webs (14) with a heat-insulating lining, wherein production of a bearing web (14) comprises:
- provision of two outer skins (18) comprising a matrix of fiber-reinforced thermoplastic polymer;
- provision of a central core (17) comprising a thermoplastic polymer matrix;
- positioning of the two outer skins (18) in a mold on either side of the central core (17); and
- joining the outer skins (18) and the central core (17);
the production method being **characterized in that** the central core (17) has a thermal conductivity less than that of the outer skins and **in that** the outer skins (18) and the central core (17) are joined by fusion of the thermoplastic matrices of the outer skins (18) and the central core (17).

12. The production method as claimed in claim 11, wherein the outer skins (18) and the central core (17) are joined by thermocompression, co-extrusion or hot laminating.

13. The production method as claimed in claim 11 or 12, wherein the base panel (10) and the cover panel (11) each comprise at least one thermoplastic element (22, 26, 29) for fixing the bearing webs (14); and wherein the bearing webs (14) are fixed to the base panel (10) and cover panel (11) by a thermoplastic welding operation in the interface zones between the bearing webs (14) and the thermoplastic elements (22, 26, 29) of the base panel (10) and cover panel (11).

14. A fluid-tight, thermally insulating fluid-storage tank comprising a thermal insulation barrier comprising a plurality of cases (3, 7) as claimed in any of claims 1 to 10 arranged next to each other, and a sealing membrane resting against the thermal insulation barrier.

15. A ship (70) for transporting a fluid, the ship comprising a double hull (72) and a tank (71) as claimed in claim 14, arranged in the double hull.

16. A method for loading or unloading a ship (70) as claimed in claim 15, wherein a fluid is conducted through insulated pipelines (73, 79, 76, 81) from or to a floating or land-based storage installation (77) to or from the ship's tank (71).

17. A system for transferring a fluid, the system comprising a ship (70) as claimed in claim 15, insulated pipelines (73, 79, 76, 81) arranged so as to connect the tank (71) installed in the ship's hull to a floating or land-based storage installation (77), and a pump for driving a fluid through insulated pipelines from or to the floating or land-based storage installation to or from the ship's tank.
